# FASCICULE DE BREVET EUROPEEN

(11) **EP 1 445 179 B1**
(45) Date de publication et mention de la délivrance du brevet: **25.10.2006**
(21) Numéro de dépôt: 04290103.3
(22) Date de dépôt: 15.01.2004
(51) Int. Cl.: B62D 63/06, B62D 53/06, E05C 3/24

(54) **Remorque pour le transport d'engins agricoles**
Transportanhänger für Landwirtschaftgeräte
Trailer for transporting agricultural tools

(30) Priorité: 07.02.2003 FR 0301453; 04.12.2003 FR 0314232
(43) Date de publication de la demande: 11.08.2004
(73) Titulaire: COCHET S.A., F-72130 Souge le Ganelon (FR)
(72) Inventeur: Cochet, Jean-Louis, 72130 Souge le Ganelon (FR)
(74) Mandataire: Faber, Jean-Paul

(56) Documents cités:
- DE-U- 20 009 156
- GB-A- 2 267 468
- US-A- 2 867 444
- US-A- 6 102 370

## Description

La présente invention vise une remorque pour le transport d'engins agricoles.

L'invention vise des remorques comprenant un châssis pourvu, à une extrémité, de moyens pour son attelage à l'arrière d'un tracteur, le châssis étant supporté par au moins deux roues.

De telles remorques étant destinées à supporter des engins lourds, il est nécessaire de pouvoir abaisser le châssis contre le sol afin de faciliter la mise en place des engins, ou, au contraire, pour les dégager de la remorque.

On connaît plusieurs systèmes permettant cette manoeuvre.

Un des premiers systèmes est de prévoir des roues à l'arrière du châssis et de pouvoir relever les roues. Une telle disposition présente l'inconvénient que la remorque comporte un grand porte-à-faux et que la mise en place ne peut s'effectuer que latéralement.

Un autre système prévoit que le châssis est monté basculant sur un axe longitudinal de sorte qu'un bord longitudinal peut porter contre le sol. Cette disposition présente l'inconvénient que la remorque n'est accessible que par le bord portant sur le sol.

Une autre réalisation prévoit que les roues peuvent être rabattues contre le sol à l'extérieur du châssis. Une telle réalisation présente l'inconvénient que la remorque ne peut être chargée que par l'arrière.

On connaît également une remorque correspondant au préambule de la revendication 1 décrite dans le brevet américain n° 2 867 444 qui comporte des patins destinés à reposer sur le sol et qui sont reliés à des supports articulés longitudinalement sur le châssis afin de pourvoir soulever celui-ci afin que les roues puissent être basculées vers l'intérieur du châssis afin de dégager l'arrière pour faciliter le chargement.

Une telle disposition présente l'inconvénient que, lors de l'abaissement des supports, le châssis est déplacé vers l'avant et lors de l'effacement de ceux-ci, le châssis est déplacé vers l'arrière ce qui oblige lors des opérations de chargement ou de déchargement de prévoir une personne au volant du tracteur.

De plus, les supports sont soumis à des efforts considérables ce qui nécessite une fabrication très complexe et chère. Enfin, le montage n'est pas prévu pour abaisser le châssis afin de faciliter le chargement.

L'un des buts de la présente invention est de remédier à ces divers inconvénients et de réaliser une remorque qui peut être abaissée au sol et qui peut être accessible aussi bien latéralement qu'à l'arrière.

La remorque, selon l'invention, est du type comprenant un châssis supporté par au moins deux roues et pourvu d'un timon pour son attelage, ladite remorque comportant, d'une part, des moyens pour abaisser le châssis de manière qu'il porte contre le sol dans une position de chargement ou de déchargement et, d'autre part, des moyens pour qu'elle repose sur les roues dans une position de transport, des moyens étant prévus pour soulever le châssis de manière que les roues soient écartées du sol pour faire basculer les roues afin qu'elles s'étendent sous le châssis et des moyens pour abaisser le châssis jusqu'au sol lorsque les roues ont été basculées sous le châssis, les moyens pour soulever le châssis et abaisser celui-ci lorsque les roues ont été basculées sous le châssis comprenant six vérins dont trois sont articulés sur une première traverse intermédiaire solidaire du châssis et trois autres vérins articulés sur une deuxième traverse intermédiaire dudit châssis, les trois premiers vérins et les trois seconds vérins étant reliés à un patin destiné à reposer sur le sol.

Grâce à cette disposition, on réalise une remorque accessible aussi bien latéralement que par l'arrière et dont la stabilité est assurée lorsque le châssis repose sur les patins et à toute hauteur.

Suivant un mode de réalisation particulier, l'un des vérins de chaque ensemble de trois vérins est articulé en un point intermédiaire de la traverse intermédiaire et est relié à l'une des extrémités du patin, tandis que le second vérin est relié à l'autre extrémité du patin, le dernier étant disposé entre les deux et articulé sur le patin au voisinage de l'extrémité de celui-ci sur laquelle est articulé le second vérin.

Suivant encore une autre caractéristique, les articulations de chaque ensemble de trois vérins sur la traverse intermédiaire sont disposées de manière que l'un des vérins soit incliné en direction de l'extrémité correspondante du patin, tandis que les deux autres sont inclinés en sens opposé. Ainsi, le patin peut être complément escamoté.

Les différents vérins peuvent être actionnés indépendamment afin que le châssis puisse être incliné vers le sol d'un côté ou de l'autre.

Suivant encore une autre caractéristique, chaque roue est portée par un bras articulé sur un côté longitudinal du châssis sur un axe horizontal supporté par des platines solidaires du châssis, chaque bras étant solidaire d'une plaque portant un téton avec lequel coopère un anneau oblong de la tige du piston d'un vérin dont le corps est articulé sur un axe du châssis, de manière que les roues puissent occuper les deux positions, la position de chargement dans laquelle elles sont basculées sous le châssis et la position de transport dans laquelle elles reposent sur le sol.

De préférence, la remorque comporte des moyens de verrouillage de chaque bras portant la roue dans la position de transport.

Suivant une caractéristique constructive, chaque platine supporte, articulé, un levier comportant une encoche avec laquelle peut coopérer un téton porté par l'anneau oblong du vérin, ledit levier étant relié par une biellette à une cale articulée sur un axe de la platine et destinée à coopérer avec un épaulement d'un verrou monté basculant sur un axe, la platine comportant un cran destiné à recevoir, dans la position de transport, un ergot solidaire du bras, le verrou fermant l'encoche dans la position de transport, tandis que celui-ci est basculé pour dégager le cran pour permettre de mettre la roue en position de chargement lorsque le téton est dégagé de l'encoche du levier engendrant un pivotement de ce dernier dont la biellette dégage la cale de l'épaulement du verrou.

Enfin, le verrou est agencé de manière à rester dans une position d'attente lorsque la roue occupe la position de chargement.

L'invention va maintenant être décrite avec plus de détails en se référant à un mode de réalisation particulier donné à titre d'exemple seulement et représenté aux dessins annexés.

Figure 1 est une vue en perspective schématique d'une remorque, selon l'invention, en position de transport.

Figure 2 est une vue en perspective de la remorque de la figure 1, en position surélevée.

Figure 3 montre en perspective une possibilité d'inclinaison de la remorque.

Figure 4 montre en perspective la remorque en position abaissée.

Figure 5 est une vue en coupe suivant la ligne 5-5 de la figure 1.

Figure 6 est une vue en coupe suivant la ligne 6-6 de la figure 2.

Figure 7 est une vue en coupe suivant la ligne 7-7 de la figure 3.

Figure 8 est une vue en coupe suivant la ligne 8-8 de la figure 4.

Figure 9 et figure 10 sont des vues à plus grande échelle montrant le mécanisme de basculement des roues.

Figures 11 et 12 sont des vues en élévation montrant en détail le mécanisme de basculement des roues respectivement en position de transport et en position de chargement.

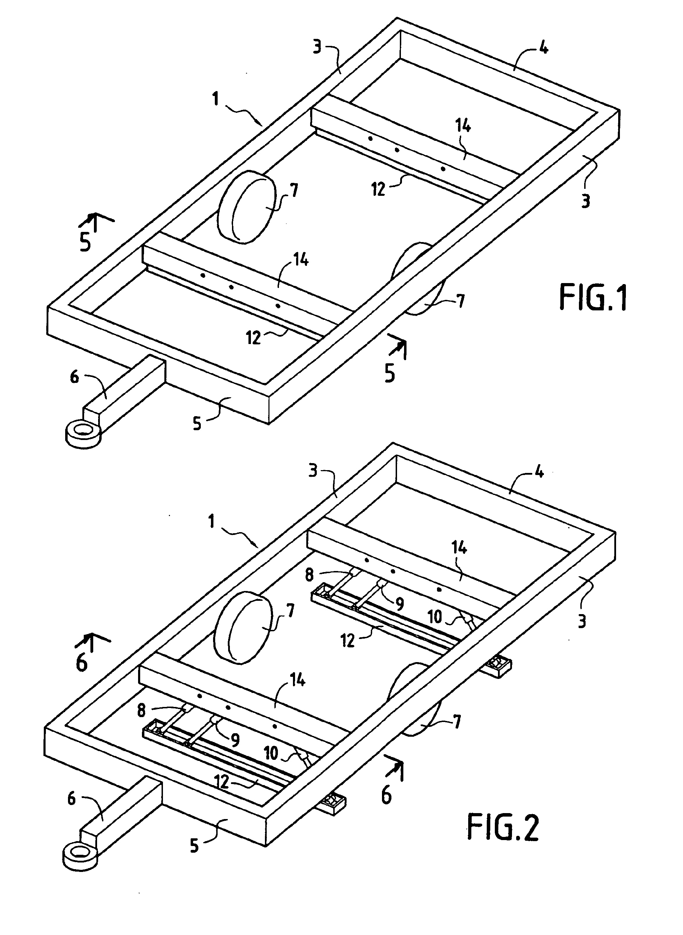

Aux différentes figures 1 à 8, on a représenté une remorque désignée dans son ensemble par la référence 1 formée d'un châssis rectangulaire 2 avec deux longerons 3 et deux petits côtés 4 et 5, le petit côté 5 étant prolongé par un timon 6 destiné à être fixé au système trois points d'un tracteur.

Dans ce mode de réalisation, la remorque est pourvue de deux roues 7.

Les longerons 3 sont reliés par deux traverses intermédiaires 14. Sur chaque traverse intermédiaire s'articulent les corps de trois vérins télescopiques 8, 9 et 10 dont les tiges des pistons sont reliées articulées à un patin 12.

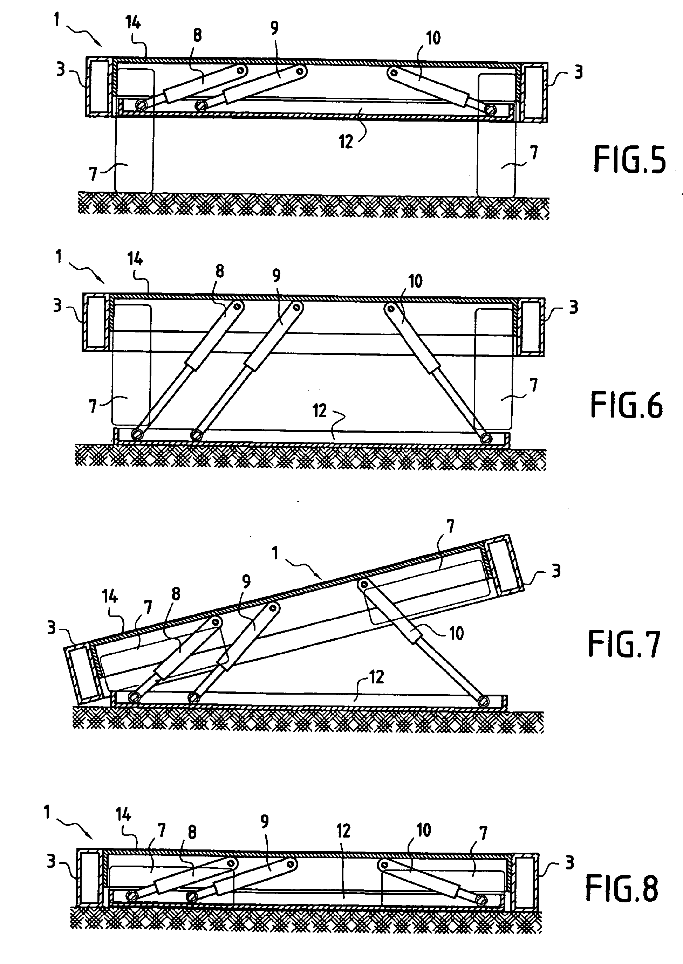

En position de transport, la remorque 1 occupe la position des figures 1 et 5, le châssis 2 étant solidaire d'un plateau (non représenté) sur lequel repose l'engin à transporter.

Aux figures 2 et 6, on a représenté la remorque dans une position dans laquelle les patins 12 reposent sur le sol, les vérins 8, 9 et 10 étant déployés. Dans cette position, les roues 7 sont surélevées.

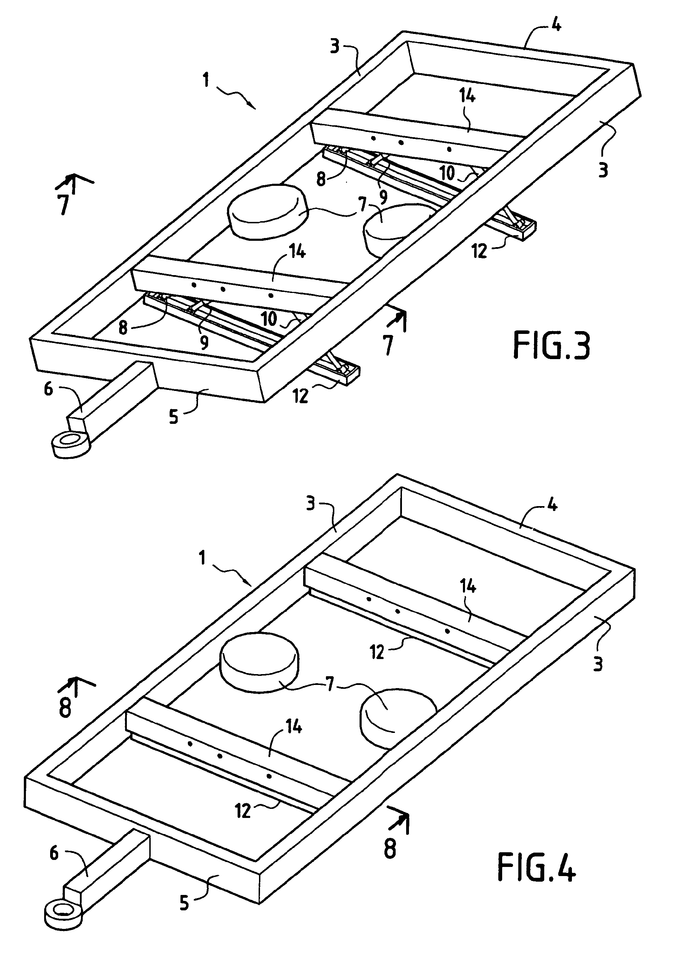

Pour abaisser la remorque 1 au sol, (voir figures 4 et 8), on commande le basculement des roues 7 de manière qu'elles viennent se situer à l'intérieur du châssis dans un plan parallèle à celui-ci puis on commande les vérins 8, 9 et 10 afin qu'ils se rétractent.

On peut également, comme cela est représenté aux figures 7 et 8, après avoir fait basculer les roues 7, commander uniquement le raccourcissement des deux vérins 8 et 9 situés d'un même côté de manière que le châssis puisse être incliné d'un côté. On conçoit qu'en commandant le raccourcissement du vérin 10, on pourra incliner le châssis 1 du côté opposé à celui représenté sur la figure 8.

Grâce à cette disposition, on réalise une remorque qui, dans la position surélevée (figures 2 et 6), a une grande stabilité ce qui est très important compte tenu du poids des engins à transporter.

Les vérins 8, 9 et 10 sont identiques et sont commandés par six pompes également identiques.

Les vérins 8 et 10 sont articulés par leur tige des pistons, au voisinage des extrémités des patins 12, tandis que le vérin 9 qui assure la stabilité est articulé par sa tige du piston au voisinage de l'extrémité du patin 12 sur lequel s'articule la tige du piston du vérin 8.

Les vérins 8 et 10 sont articulés sur les traverses intermédiaires 14 de manière à être inclinés dans un sens tandis que le vérin 8 est incliné dans le sens opposé.

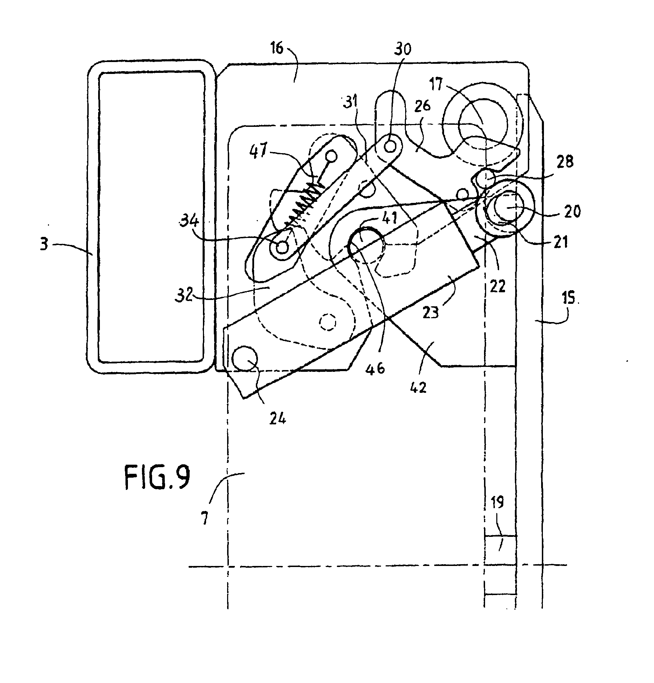

Les figures 9 à 12 montrent le mécanisme de basculement des roues 7.

Chaque longeron 3 porte deux platines 16 supportant un axe 17 sur lequel s'articule un bras 15 portant un arbre 19 sur lequel s'articule la roue 7.

Le bras 15 porte un téton 20 avec lequel coopère un anneau oblong 21 solidaire de la tige d'un piston 22 d'un vérin 23 articulé sur un axe 24 porté par les platines 16.

Sur les platines 16 est articulé, sur un axe 25, un levier 26 portant une encoche 27 dans laquelle s'insère un téton 28 solidaire de l'anneau oblong 21.

Sur le levier 26 s'articule, sur un axe 30, une biellette 31 dont l'autre extrémité est articulée sur un axe 34 porté par une cale 32 articulée sur un axe 33.

Les platines 16 portent des crans 40 destinés à recevoir un ergot 41 porté par une barrette 42 solidaire du bras 15.

Sur les platines 16 est articulé, sur un axe 37, un verrou 45 comportant un cran 46 et relié articulé par un ressort de traction 47 à l'axe 34.

Le verrou 45 est pourvu d'un épaulement 48 avec lequel coopère une partie 49 de la cale 32 pour assurer le blocage de l'ergot 41 lorsqu'il est inséré dans le cran 40.

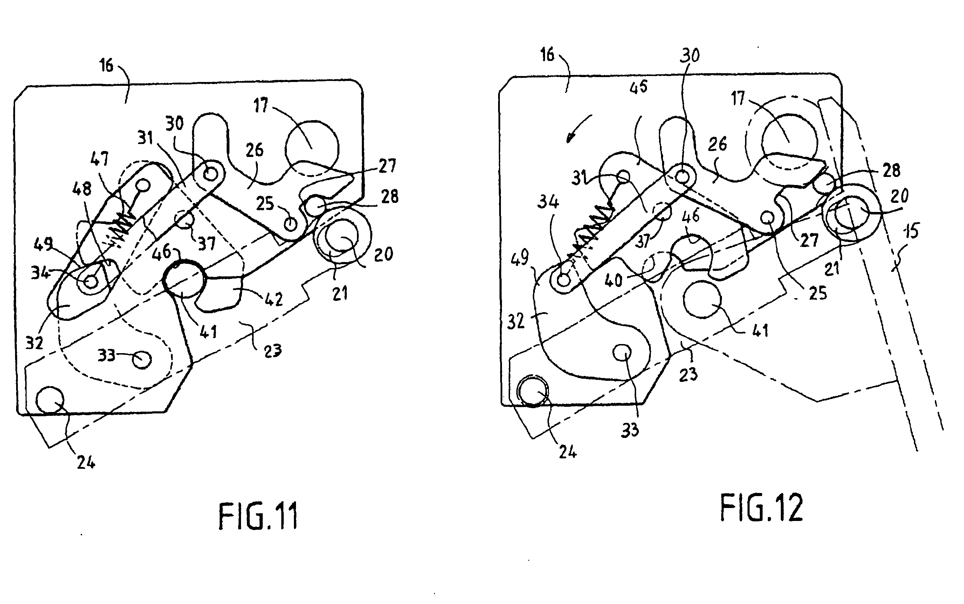

En position de transport, lorsque les roues 7 reposent sur le sol, l'ergot 41 est bloqué par le cran 46 et la roue ne peut basculer (figures 9 et 11).

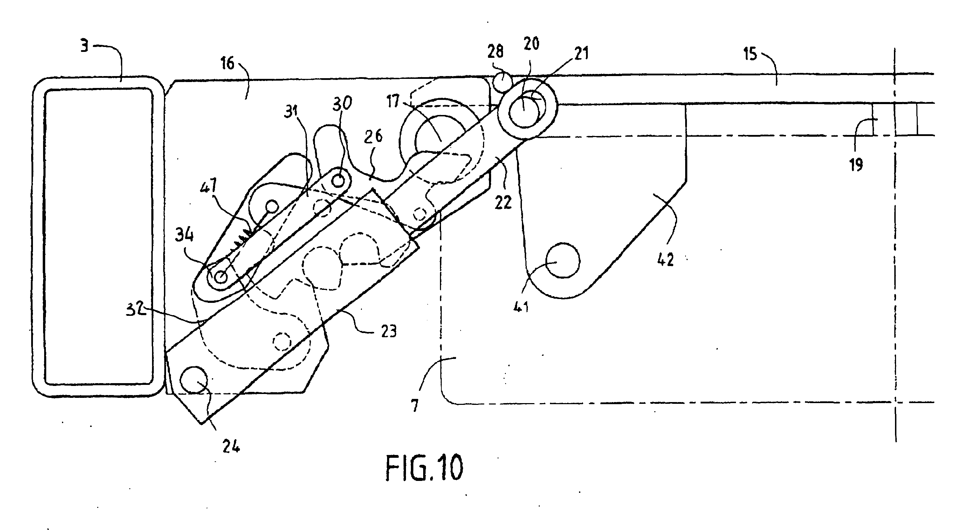

Lorsqu'on désire faire basculer les roues 7 pour les placer sous le châssis, on commande le vérin 23 dont le téton 28 pousse le levier 26 afin qu'il pivote sur l'axe 25. Lors de ce pivotement, la biellette 31 pousse la cale 32 dont la partie 49 échappe l'épaulement 48 de sorte que le verrou 45 tiré par le ressort de traction 47, bascule autour de l'axe 37 dans le sens de la flèche (voir figure 12) ainsi l'ergot 41 peut échapper le cran 40 et le bras 15 peut pivoter librement jusque dans la position représentée à la figure 10.

Lorsque la roue 7 occupe la position de la figure 10 (roue placée sous le châssis), les différentes pièces 26, 45 et 32 restent dans la position de la figure 12 puisque l'extrémité libre de l'épaulement 48 bute contre la cale 32 de sorte que, lorsqu'on commande le vérin 23 pour ramener les roues dans la position de transport, le téton 28 peut aisément s'insérer dans l'encoche 27 et l'ergot 41 dans le cran 40, le verrou 45 revenant dans sa position initiale pour bloquer ledit ergot 41 (voir figure 11).

Bien entendu, l'invention n'est pas limitée au mode de réalisation qui vient d'être décrit et représenté. On pourra y apporter de nombreuses modifications de détail sans sortir pour cela du cadre de l'invention tel que définie par la revendication 1.

## Revendications

1. Remorque pour le transport d'engins tels que des machines agricoles du type comprenant un châssis (1) supporté par au moins deux roues (7) et pourvu d'un timon pour son attelage, ladite remorque comportant, d'une part, des moyens pour abaisser le châssis (1) de manière qu'il porte contre le sol dans une position de chargement ou de déchargement et, d'autre part, des moyens pour qu'elle repose sur les roues dans une position de transport, des moyens étant prévus pour soulever le châssis de manière que les roues (7) soient écartées du sol, pour faire basculer les roues (7) afin qu'elles s'étendent sous le châssis (1), ladite remorque étant **caractérisée en ce que** les moyens pour soulever le châssis permettent également d' abaisser celui-ci jusqu'au sol lorsque les roues ont été basculées sous le châssis et comprennent six vérins dont trois sont articulés sur une première traverse (14) intermédiaire solidaire du châssis (1) et trois autres vérins (8, 9, 10) articulés sur une deuxième traverse (14) intermédiaire dudit châssis (1), les trois premiers vérins et les trois seconds vérins étant reliés à un patin (12) destiné à reposer sur le sol.

2. Remorque pour le transport d'engins tels que des machines agricoles, selon la revendication 1, **caractérisée en ce que** l'un des vérins (8) de chaque ensemble de trois vérins est articulé en un point intermédiaire de la traverse intermédiaire (14) et est relié à l'une des extrémités du patin (12), tandis que le second vérin est articulé en un point intermédiaire de ladite traverse (14) et est relié à l'autre extrémité du patin (12), le dernier vérin étant disposé entre les deux premiers et articulés sur le patin au voisinage de l'extrémité de celui-ci sur laquelle est articulé le second vérin.

3. Remorque pour le transport d'engins tels que des machines agricoles, selon les revendications 1 et 2, **caractérisée en ce que** les articulations de chaque ensemble de trois vérins (8, 9, 10) sur la traverse intermédiaire (14) sont disposées de manière que l'un des vérins (8) soit incliné en direction de l'extrémité correspondante du patin (12), tandis que les deux autres sont inclinés en sens opposé.

4. Remorque pour le transport d'engins tels que des machines agricoles, selon les revendications 1 et 2, **caractérisée en ce que** les différents vérins (8, 9, 10) peuvent être actionnés indépendamment les uns des autres.

5. Remorque pour le transport d'engins tels que des machines agricoles, selon la revendication 1, **caractérisée en ce que** chaque roue (7) est portée par un bras (15) articulé sur un côté longitudinal (3) du châssis sur un axe horizontal (17) supporté par des platines (16) solidaires du châssis, chaque bras (15) étant solidaire d'une plaque (42) portant un téton avec lequel coopère un anneau oblong (21) de la tige du piston (22) d'un vérin (23) dont le corps est articulé sur un axe (24) du châssis, de manière que les roues puissent occuper les deux positions, la position de chargement dans laquelle elles sont basculées sous le châssis et la position de transport dans laquelle elles reposent sur le sol.

6. Remorque pour le transport d'engins tels que des machines agricoles, selon les revendications 1 et 5, **caractérisée en ce qu**'elle comporte des moyens de verrouillage de chaque bras portant la roue dans la position de transport.

7. Remorque pour le transport d'engins tels que des machines agricoles, selon les revendications 5 et 6, **caractérisée en ce que** chaque platine (16) supporte, articulé, un levier (26) comportant une encoche (27) avec laquelle peut coopérer un téton (28) porté par l'anneau oblong (21) du vérin, ledit levier étant relié par une biellette (31) à une cale (32) articulée sur un axe (33) de la platine (16) et destinée à coopérer avec un épaulement (48) d'un verrou (45) monté basculant sur un axe (37), la platine comportant un cran (40) destiné à recevoir, dans la position de transport, un ergot (41) solidaire du bras (15), le verrou (45) fermant l'encoche dans la position de transport, tandis que celui-ci est basculé pour dégager le cran (40) pour permettre de mettre la roue en position de chargement lorsque le téton (28) est dégagé de l'encoche (27) du levier engendrant un pivotement de ce dernier dont la biellette (31) dégage la cale de l'épaulement du verrou.

8. Remorque pour le transport d'engins tels que des machines agricoles, selon la revendication 7, **caractérisée en ce que** le verrou (45) est agencé de manière à rester dans une position d'attente lorsque la roue occupe la position de chargement.

## Claims

1. Trailer for the transportation of equipment such as agricultural machinery, of the type comprising a chassis (1) supported by at least two wheels (7) and provided with a tow bar for the coupling thereof, said trailer comprising, on the one hand, means for lowering the chassis (1) in such a way that it bears against the ground in a loading or unloading position and, on the other hand, means for allowing the trailer to rest on the wheels in a transportation position, means being provided for raising the chassis in such a way that the wheels (7) are set apart from the ground, to cause the wheels (7) to tilt so that they extend below the chassis (1), said trailer being **characterised in that** the means for raising the chassis also allow said chassis to be lowered to the ground once the wheels have been tilted below the chassis and comprise six actuators, three of which are articulated to a first intermediate crossmember (14), integral with the chassis (1), and three other actuators (8, 9, 10) articulated to a second intermediate crossmember (14) of said chassis (1), the three first actuators and the three second actuators being connected to a shoe (12) intended to rest on the ground.

2. Trailer for the transportation of equipment such as agricultural machinery according to claim 1, **characterised in that** one of the actuators (8) of each set of three actuators is articulated at an intermediate point of the intermediate crossmember (14) and is connected to one of the ends of the shoe (12), whereas the second actuator is articulated at an intermediate point of said crossmember (14) and is connected to the other end of the shoe (12), the final actuator being arranged between the first two and articulated to the shoe in the vicinity of the end thereof to which the second actuator is articulated.

3. Trailer for the transportation of equipment such as agricultural machinery according to claims 1 and 2, **characterised in that** the articulations of each set of three actuators (8, 9, 10) to the intermediate crossmember (14) are arranged in such a way that one of the actuators (8) is inclined toward the corresponding end of the shoe (12), whereas the other two are inclined in the opposite direction.

4. Trailer for the transportation of equipment such as agricultural machinery according to claims 1 and 2, **characterised in that** the various actuators (8, 9, 10) may be activated independently of one another.

5. Trailer for the transportation of equipment such as agricultural machinery according to claim 1, **characterised in that** each wheel (7) is carried by an arm (15) articulated to a longitudinal side (3) of the chassis on a horizontal axle (17) supported by plates (16) integral with the chassis, each arm (15) being integral with a panel (42) carrying a stud with which there cooperates an oblong ring (21) of the rod of the piston (22) of an actuator (23), the body of which is articulated to an axle (24) of the chassis, in such a way that the wheels are able to occupy the two positions: the loading position, in which they are tilted below the chassis, and the transportation position, in which they rest on the ground.

6. Trailer for the transportation of equipment such as agricultural machinery according to claims 1 and 5, **characterised in that** it comprises means for locking each arm carrying the wheel in the transportation position.

7. Trailer for the transportation of equipment such as agricultural machinery according to claims 5 and 6, **characterised in that** each plate (16) supports, in an articulated manner, a lever (26) comprising a notch (27) with which there may cooperate a stud (28) carried by the oblong ring (21) of the actuator, said lever being connected by a link rod (31) to a chock (32) articulated to an axle (33) of the plate (16) and intended to cooperate with a shoulder (48) of a bolt (45) mounted on an axial (37) so as to be able to tilt, the plate comprising a recess (40) intended to receive, in the transportation position, a lug (41) integral with the arm (15), the bolt (45) closing the notch in the transportation position, whereas said bolt is tilted to clear the recess (40) to allow the wheel to be placed in the loading position when the stud (28) is released from the notch (27) in the lever, thereby causing pivoting of said lever, the link rod (31) of which releases the chock from the shoulder of the bolt.

8. Trailer for the transportation of equipment such as agricultural machinery according to claim 7, **characterised in that** the bolt (45) is configured to remain in a ready position when the wheel occupies the loading position.

## Patentansprüche

1. Anhänger für den Transport von Maschinen, wie landwirtschaftlichen Maschinen vom Typ umfassend ein Fahrgestell (1), das von wenigstens zwei Rädern (7) getragen wird und mit einer Deichsel für dessen Kuppelvorrichtung versehen ist, wobei der Anhänger einerseits Mittel zum Absenken des Fahrgestells (1), so dass es in einer Position zum Beladen oder Entladen auf dem Boden aufliegt, und andererseits Mittel aufweist, damit er in einer Transportposition auf den Rädern ruht, wobei Mittel vorgesehen sind, um das Fahrgestell derartig anzuheben, dass sich die Räder (7) vom Boden entfernen, um die Räder (7) umklappen zu lassen, so dass sie sich unter dem Fahrgestell (1) erstrecken, wobei der Anhänger **dadurch gekennzeichnet ist, dass** die Mittel zum Anheben des Fahrgestells es auch ermöglichen, dieses bis zum Boden abzusenken, wenn die Räder unter das Fahrgestell umgeklappt worden sind und sechs Zylinder umfassen, von denen drei an einer fest am Fahrgestell (1) angebrachten ersten Zwischentraverse (14) angelenkt sind und drei weitere Zylinder (8, 9, 10) an einer zweiten Zwischentraverse (14) des Fahrgestells (1) angelenkt sind, wobei die drei ersten Zylinder und die drei zweiten Zylinder mit einem Tragsegment (12) verbunden sind, das vorgesehen ist, um auf dem Boden zu ruhen.

2. Anhänger für den Transport von Maschinen, wie landwirtschaftlichen Maschinen, nach Anspruch 1, **dadurch gekennzeichnet, dass** einer der Zylinder (8) jeder Einheit von drei Zylindern an einem zwischenliegenden Punkt der Zwischentraverse (14) angelenkt und mit einem der Enden des Tragsegmentes (12) verbunden ist, während der zweite Zylinder an einem zwischenliegenden Punkt der Zwischentraverse (14) angelenkt und mit dem anderen Ende des Tragsegmentes (12) verbunden ist, wobei der letztere Zylinder zwischen den zwei ersten angeordnet und an dem Tragsegment in der Nähe dessen Endes angelenkt ist, an dem der zweite Zylinder angelenkt ist.

3. Anhänger für den Transport von Maschinen, wie landwirtschaftlichen Maschinen, nach den Ansprüchen 1 und 2, **dadurch gekennzeichnet, dass** die Gelenke jeder Einheit von drei Zylindern (8, 9, 10) an der Zwischentraverse (14) derartig angeordnet sind, dass der eine der Zylinder (8) in Richtung des entsprechenden Endes des Tragsegmentes (12) geneigt wird, während die beiden anderen in entgegengesetzte Richtung geneigt werden.

4. Anhänger für den Transport von Maschinen, wie landwirtschaftlichen Maschinen, nach den Ansprüchen 1 und 2, **dadurch gekennzeichnet, dass** die verschiedenen Zylinder (8, 9, 10) unabhängig voneinander betätigt werden können.

5. Anhänger für den Transport von Maschinen, wie landwirtschaftlichen Maschinen, nach Anspruch 1, **dadurch gekennzeichnet, dass** jedes Rad (7) von einem Arm (15) getragen wird, der an einer Längsseite (3) des Fahrgestells an einem horizontalen Bolzen (17) angelenkt ist, der von fest mit dem Fahrgestell verbundenen Halteplatten (16) gehalten wird, wobei jeder Arm (15) fest mit einer Platte (42) verbunden ist, die einen Zapfen trägt, mit dem ein länglicher Ring (21) der Kolbenstange (22) eines Zylinders (23) zusammenwirkt, dessen Körper an einem Bolzen (24) des Fahrgestells derartig angelenkt ist, dass die Räder die zwei Positionen einnehmen können, die Position zur Beladung, in der sie unter das Fahrgestell geklappt sind, und die Transportposition, in der sie auf dem Boden ruhen.

6. Anhänger für den Transport von Maschinen, wie landwirtschaftlichen Maschinen, nach den Ansprüchen 1 und 5, **dadurch gekennzeichnet, dass** er Mittel zum Verriegeln jedes das Rad tragenden Arms in der Transportposition umfasst.

7. Anhänger für den Transport von Maschinen, wie landwirtschaftlichen Maschinen, nach den Ansprüchen 5 und 6, **dadurch gekennzeichnet, dass** jede Halteplatte (16) angelenkt einen Hebel (26) trägt, der eine Vertiefung (27) aufweist, mit der ein Zapfen (28) zusammenwirken kann, der von dem länglichen Ring (21) des Zylinders getragen wird, wobei der Hebel durch einen Schwingarm (31) mit einem Keil (32) verbunden ist, der an einem Bolzen (33) der Halteplatte (16) gelenkig angebracht und dafür vorgesehen ist, mit einer Schulter (48) eines Riegels (45) zusammen zu wirken, der an einem Bolzen (37) kippbar montiert ist, wobei die Halteplatte eine Einkerbung (40) umfasst, die dafür vorgesehen ist, in der Transportposition einen fest mit dem Arm (15) verbundenen Stift (41) aufzunehmen, wobei der Riegel (45) die Vertiefung in der Transportposition schließt, während dieser gekippt wird, um die Einkerbung (40) freizulegen, um es zu ermöglichen, das Rad in Position zum Beladen zu versetzen, wenn der Zapfen (28) aus der Vertiefung (27) des Hebels freigegeben wird, der eine Drehung dieses letzteren erzeugt, dessen Schwingarm (31) den Keil von der Schulter des Riegels freigibt.

8. Anhänger für den Transport von Maschinen, wie landwirtschaftlichen Maschinen, nach Anspruch 7, **dadurch gekennzeichnet, dass** der Riegel (45) derartig angelenkt ist, dass er in einer Warteposition verharrt, wenn das Rad die Position zur Beladung einnimmt.
